## Europäisches Patentamt

## European Patent Office

## Office européen des brevets

(11) Veröffentlichungsnummer: **0 333 905**

**A1**

(12) EUROPÄISCHE PATENTANMELDUNG

(21) Anmeldenummer: 88104807.8

(51) Int. Cl.⁴: **G01P 5/00**

(22) Anmeldetag: 25.03.88

(43) Veröffentlichungstag der Anmeldung:
27.09.89 Patentblatt 89/39

(84) Benannte Vertragsstaaten:
**AT BE CH DE FR GB IT LI NL SE**

(71) Anmelder: **Dopheide, Dietrich, Dr.**
**Leimenweg 7**
**D-3300 Braunschweig(DE)**

Anmelder: **Faber, Michael, Dipl.-Ing.**
**Wilhelmshavener Strasse 27**
**D-3300 Braunschweig(DE)**

Anmelder: **Reim, Gerhard, Dipl.-Ing.**
**Suhkamp 9**
**D-3300 Braunschweig(DE)**

Anmelder: **Taux, Günter, Dipl.-Phys.**
**Weinberg Strasse 9**
**D-3300 Braunschweig(DE)**

(72) Erfinder: **Dopheide, Dietrich, Dr.**
**Leimenweg 7**
**D-3300 Braunschweig(DE)**
Erfinder: **Faber, Michael, Dipl.-Ing.**
**Wilhelmshavener Strasse 27**
**D-3300 Braunschweig(DE)**
Erfinder: **Reim, Gerhard, Dipl.-Ing.**
**Suhkamp 9**
**D-3300 Braunschweig(DE)**
Erfinder: **Taux, Günter, Dipl.-Phys.**
**Weinberg Strasse 9**
**D-3300 Braunschweig(DE)**

(74) Vertreter: **Lichti, Heiner, Dipl.-Ing. et al**
**Patentanwälte Dr. Ing. Hans Lichti Dipl.-Ing.**
**Heiner Lichti Dipl.-Phys. Dr.rer.nat. Jost**
**Lempert Durlacher Strasse 31 Postfach**
**410760**
**D-7500 Karlsruhe 41(DE)**

(54) **4PI-Laser-Doppler -Anemometer (LDA) zur Messung von Geschwindigkeiten bewegter Messobjekte.**

(57) Laser-Doppler-Anemometer mit einer wellenlängenstabilisierten Laserdiode (1), deren Strahl nach Teilung (7) in einem bestimmten Bereich (9) einer Partikel enthaltenden Strömung (17) eines Fluids so konzentriert wird, daß in diesem Bereich (9) ein Interferenzstreifenmuster entsteht, und mit wenigstens einer Halbleiter-Photodiode (13), auf die die vom Bereich (9) fortlaufenden Laserstrahlen (10, 11) nach Eliminierung von Streulichtanteilen durch eine Streulichtfalle (Blende) (14) refokussiert werden, zur

Detektion des Differenzsignals I zwischen einfallender Intensität $I_o$ und von im Fluid mitgeführten Partikeln im Bereich (9) den in gesamten Raumwinkel $4\pi$ gestreuten Streulichtintensität $I_{streu}$, wobei gilt $I = I_o - I_{streu}$. Durch Detektion des nach Durchlaufen des Meßortes (9) mit der Dopplerfrequenz modulierten Laserstrahls der Intensität I kann die gesamte vom Partikel in den Raumwinkel $4\pi$ gestreute Lichtintensität $I_{streu}$ für das Signal-Rausch-Vehältnis am Photodetektor nutzbar gemacht werden und bei Verwendung von geeigneten Halbleiter-Photodioden eine Erkennung der Strömungsrichtung erfolgen.

Fig. 1

## 4-$\pi$ Laser-Doppler-Anemometer (LDA) zur Messung von Geschwindigkeiten bewegter Meßobjekte

Die Erfindung betrifft ein Laser-Doppler-Anemometer mit einer wellenlängenstabilen Laserdiode, deren Laserstrahl nach einer Strahlteilung in einem bestimmten Bereich (Meßbereich) einer Partikel enthaltenden Strömung eines Fluids derart konzentriert wird, daß in diesem Bereich ein Interferenzstreifenmuster entsteht, und mindestens ein Photodetektor zur Detektion der vom o.g. Meßbereich weiterlaufenden beiden Laserstrahlen.

Die Erfindung geht aus von einem Laser-Doppler-Anemometer, wie es durch die DE-OS 34 35 423 bekannt ist. Das vorliegende und noch zu beschreibende Meßprinzip hat gegenüber allen anderen bekannten Verfahren der Laser-Doppler-Anemometrie den Vorteil, das Zusammenspiel von Sender und Empfänger derart zu optimieren, daß sende- wie empfangsseitig billigste Halbleiterbauelemente selbst bei extrem schwierigen und bis dato nicht bewältigten Meßproblemen eingesetzt werden können. In bekannter Technik werden zwei Teilstrahlen derselben Laserdiode in dem zu untersuchenden Bereich eines strömenden Fluids so überlagert, daß ein Interferenzstreifenmuster entsteht. Bei zu gewährleistender Wellenlängenkonstanz der Laserdiode ist dieses Interferenzstreifenmuster stabil und stationär.

Der Abstand der Intensitätsmaxima des Interferenzstreifenmusters ist abhängig von der Laserwellenlänge und dem Schnittwinkel zwischen den beiden Laserstrahlen im Meßbereich.
Ein dieses Interferenzstreifenmuster durchquerendes Partikel eines strömenden Fluids bewirkt Streulichtemissionen mit der Intensität $I_{streu}$ in den gesamten Raumwinkel $4\pi$, deren Modulationsfrequenz (Dopplerfrequenz) der Partikelgeschwindigkeit proportional ist.
Beim herkömmlichen bekannten LDA-Verfahren wird mit einer Empfangsoptik ein nur kleiner Teil des in den vollen Raumwinkel $4\pi$ gestreuten Streulichtes auf den Photodetektor fokussiert, welcher je nach Größe der Streulichtleistung die Dopplerfrequenz mit mehr oder weniger großen Signal-Rausch-Verhältnissen registriert. Die Bestimmung der Dopplerfrequenz bei diesem bekannten herkömmlichen LDA-Verfahren stößt insbesondere dann auf Schwierigkeiten, wenn keine hinreichend große Streulichtintensität registriert wird, da dann die Signal-Rausch-Verhältnisse sehr klein werden. Dies tritt besonders bei großen Meßentfernungen auf, da dann die Aperturen der Empfangslinsen den Raumwinkel, in welchem das Streulicht empfangen wird, begrenzen und bei sehr kleinen Partikeln im Mikrometer-Bereich oder darunter, da diese physikalisch bedingt nur wenig Streulicht emittieren.

Der erfindungsgemäße Gedanke des neuen LDA-Meßverfahrens (4$\pi$-LDA) liegt nun darin, die gesamte in den Raumwinkel $4\pi$ gestreute Streulichtleistung $I_{streu}$ für die Empfangssignale nutzbar zu machen. Demzufolge können dann erheblich bessere Signal-Rausch-Verhältnisse erzielt werden als beim herkömmlichen LDA-Verfahren, da dort nur ein Bruchteil der gesamten Streulichtintensität zum Signal-Rausch-Verhältnis beiträgt.

Zur Messung der Strömungsgeschwindigkeit eines Fluids auch unter o.g. Bedingungen (z.B. große Meßentfernung, kleinste Partikel) bei gleichzeitiger drastischer Kostenreduzierung und Miniaturisierung einer LDA-Meßapparatur sieht die Erfindung vor, die Geschwindigkeitsinformation direkt aus der Differenzintensität $I$ zwischen der Laserstrahlintensität $I_0$ und der in den gesamten Raumwinkel $4\pi$ gestreuten Streulichtintensität $I_{streu}$ zu messen, wobei gilt $I = I_0 - I_{streu}$.

Der Erfindung liegt also die Aufgabe zugrunde, ein Laser-Doppler-Anemometer der eingangs erwähnten Art derart zu gestalten, daß billigste Bauelemente bei gleichzeitiger Optimierung der Empfangseigenschaften selbst unter schwierigsten Meßbedingungen eingesetzt werden können.

Diese Aufgabe wird erfindungsgemäß dadurch gelöst, daß empfangsseitig die vom Meßbereich (Schnittpunkt der beiden Laser-Teilstrahlen) fortlaufenden Teilstrahlen mit Hilfe einer optischen Vorrichtung direkt auf einen geeigneten Photodetektor fokussiert werden bei gleichzeitiger Eliminierung von Streulichtanteilen. Der Photodetektor registriert dann die einfallende Differenzintensität $I$, wobei für die empfangene Intensität $I$ gilt $I = I_0 - I_{streu}$.

Das Ausgangssignal des Photodetektors besteht aus einer DC-Komponente (Gleichlichtanteil $I_0$), der eine AC-Komponente (Wechsellichtanteil $I_{streu}$) überlagert ist. Die letztere Komponente der Intensität $I_{streu}$ ist die vom Partikel in den gesamten Raumwinkel $4\pi$ gestreute Streulichtleistung, so daß der Detektor ein Meßsignal mit gutem Signal-Rausch-Verhältnis registriert.

Die erwähnte DC-Komponente, die vom Detektor registriert wird, kann zur automatischen und optimierten Justierung des Photodetektors über eine XYZ-Motorverschiebung des Detektors mit elektronischem Regelkreis benutzt werden.

Der entscheidende Unterschied zum herkömmlichen LDA-Verfahren und der erfinderische Gedanke besteht entsprechend den Ausführungen darin, das gesamte in den Raumwinkel $4\pi$ gestreute Streulicht für die Signal-Rausch-Verhältnisse der Detektorsignale nutzbar zu machen. Dies war bei allen anderen bisher bekannten LDA-Verfahren bisher prinzipiell nicht möglich. Das vom Partikel ausgehende Streulicht selbst wird durch eine Blende vom Photodetektor ferngehalten und nur die Laserlichtstrahlen selbst gelangen durch die Blende auf den Photodetektor.

In einer außerordentlich vorteilhaften Modifikation der Erfindung ist es möglich, jeden einzelnen Teilstrahl, der aus dem Meßort fortläuft, durch geeignete Optik auf einen eigenen separaten Photodetektor zu fokussieren ("Zwei-Detektor-4π-LDA"). Jeder Detektor empfängt dann einen DC-Signalanteil, der der Intensität des Laserteilstrahles entspricht, und einen überlagerten AC-Signalanteil, dessen Modulationsfrequenz (Dopplerfrequenz) der Geschwindigkeit eines Streupartikels im Meßort proportional ist.

Hierbei entspricht wieder die Intensität des AC-Signalanteils der Streulichtintensität, die ein Streupartikel im Meßort von der Intensität des einfallenden Laser-Teilstrahles in alle Raumrichtungen gestreut hat.

Jedes Detektorsignal kann unabhängig verstärkt werden und dann in einer Addierstufe wieder zu einem Signal summiert werden.

Der Vorteil der erfindungsgemäßen Anordnung von zwei Detektoren besteht darin, daß auf einfache Weise eine Verbesserung des Signal-Rausch-Verhältnisses im geschwindigkeitsproportionalen AC-Signal erzielt wird, denn die statistisch unabhängigen Signalanteile (also Rauschanteile) in den beiden Detektorsignalen heben sich bei der Addition zum Teil gegenseitig auf, während die AC-Signalanteile sich phasenrichtig verstärken.

Eine weitere Modifikation der Empfangsseite des "4π-LDA" erlaubt die simultane Messung von Geschwindigkeit und Richtung einer Strömung ("4π-LDA mit Richtungsdetektion").

Werden die vom Meßort fortlaufenden Laserstrahlen selbst direkt in der oben beschriebenen Art und Weise auf einen geeigneten Photodetektor mit zwei getrennten lichtempfindlichen Flächen geringer räumlicher Separation refokussiert und dieser Photodetektor derart justiert, daß jeweils eine Hälfte des Interferenzstreifenmusters auf eine der Detektorflächen abgebildet wird, so wird je nach Flugrichtung eines den Meßort durchquerenden Partikels ein entsprechendes Doppler-Signal zuerst von der einen und dann der anderen lichtempfindlichen Fläche generiert.

Bei Verwendung einer geeigneten Logik läßt sich dann aus den Signalen beider lichtempfindlicher Detektorflächen ein eindeutiges Richtungssignal ableiten, und bei gleichzeitiger Verwendung eines geeigneten Addierers ebenfalls die gewünschte Geschwindigkeitsinformation.

Das Verfahren eignet sich sowohl für die konventionelle LDA-Technik als auch für die beschriebene Technik der Differenzdetektion. Im letztgenannten Fall können darüberhinaus die DC-Komponenten der Detektorsignale zur optimalen Justage des Detektors herangezogen werden.

Durch eine weitere erfindungsgemäße mögliche Anordnung ist es auch vorteilhaft möglich, eine in der optischen Achse liegende Geschwindigkeitskomponente einer Strömung zu messen.

Hinsichtlich dieser Geschwindigkeitskomponente wird in bekannter Technik ein Laserstrahl einer Laserdiode im Meßbereich derart sich selbst überlagert, daß ein Interferenzstreifenmuster senkrecht zur optischen Systemachse entsteht.

Im Gegensatz sur bekannten Technik wird nun jedoch der Laserstrahl nach Durchlaufen des Meßbereiches umgelenkt und unter einem bestimmten Winkel in denselben zurückgeworfen und danach in der o.g. Weise direkt auf einen Photodetektor fokussiert. An eine verwendbare Laserdiode werden die bekannten Anforderungen der Wellenlängenstabilität und zusätzlich die Bedingung hinreichender, d. h. dem Laufweg des Laserstrahls vom Meßbereich über Umlenkung zu diesem zurück entsprechender Kohärenzlänge gestellt.

Ein das Interferenzstreifenmuster durchquerendes Partikel eines strömenden Fluids bewirkt wieder Streulichtemissionen in den gesamten Raumwinkel $4\pi$ deren Modulationsfrequenz (Dopplerfrequenz) der Partikelgeschwindigkeit proportional ist.

Unter der Bedingung ausreichender Kohärenz des Laserdiodenlichtes enthält der oben erwähnte auf den Photodetektor fokussierte Laserstrahl die Geschwindigkeitsinformation dann als Differenzsignal aus eingestrahlter Intensität $I_0$ und Streulichtintensität $I_{streu}$ in den gesamten Raumwinkel $4\pi$ als eine einer DC-Komponente überlagerten AC-Komponente, wenn die Laufzeit eines Teilchens vom v-ten zum (v + 1)-ten Interferenzstreifen größer ist als die Laufzeit des Laserlichtes vom Meßbereich über die Umlenkstrecke und zurück zu diesem, so daß also

$$\frac{\Delta x}{V_z} \gg \frac{1}{c} \quad \text{oder} \quad V_z \ll \frac{x}{1} \cdot c$$

sein muß mit

$\Delta X$:    Interferenzstreifenabstand,

$V_z$:    Geschwindigkeitskomponente eines Partikels längs der optischen Achse,

l:    Weg des Laserstrahls vom Meßort über Umlenkung und zu diesem zurück

c :    Lichtgeschwindigkeit.

Die DC-Komponente des Photodetektorsignals kann wiederum zur optimierten Justierung des Detektors z.B. über einen eine XYZ-Motorverschiebung steuernden elektronischen Regelkreis benutzt werden.

Durch geeignete Kombination der oben bechriebenen Anordnungen ist es auf einfache Weise möglich, drei orthogonale Geschwindigkeitskomponenten einer Strömung simultan bei nur einer Laserwellenlänge zu messen. ("Drei-Komponenten-$4\pi$-LDA"). Zu diesem Zweck können z.B. zwei "$4\pi$-Laser-Doppler-Anemometer" orthogonal zueinander angeordnet und eine oben beschriebene Anordnung zur Messung einer Geschwindigkeitskomponente in der Systemachse zugefügt werden. Darüberhinaus können für die beiden erstgenannten Komponenten Photodetektoren mit zwei getrennten lichtempfindlichen Flächen, wie oben beschrieben, zur zusätzlich Richtungserkennung verwendet werden.

Der Vorteil dieser Kombination liegt in ihrer vielseitigen Anwendbarkeit sowie der kompakten und einfachen Bauweise und ihrer einfachen Justierbarkeit und in der Tatsache, daß nur eine einzige Wellenlänge zur Messung aller ddrei Geschwindigkeitskomponenten erforderlich ist.

Eine vorteilhafte Erweiterung des "Zwei-Detektor-$4\pi$-LDA" unter Beibehaltung der oben beschriebenen Vorteile wird dadurch erreicht, daß zusätzlich geeignete Umlenk- und Aufweitungsoptiken eingesetzt werden, so daß Geschwindigkeitsmessungen über große Entfernungen, welche in konventioneller LDA-Technik nicht erreicht werden, möglich sind.

In einer weiteren Modifikation der Erfindung reichen kleine Öffnungen in einer die Strömung begrenzenden Wandung aus, um die Laserstrahlen in die Strömung einzuführen und mittels der Anordnung der Streulicht-Differenzdetektion die Strömungsgeschwindigkeiten zu messen. Dabei können die Sende- und Empfangsoptiken ersetzt werden durch Einfügungen von geeigneten lichtbrechenden Elementen in die Öffnungen der Wandung.

Durch die erfindungsgemäß mögliche orthogonale Anordnung von zwei "$4\pi$-Laser-Doppler-Anemometern" und dem empfangsseiti gen Einsatz eines Vier-Quadranten-Photodetektormoduls werden zwei orthogonale Geschwindigkeitskomponenten und gleichzeitig auch die Richtungen der Geschwindigkeiten entsprechend der oben beschriebenen Anordnung "$4\pi$-LDA mit Richtungsdetektion" mit einem Detektor simultan gemessen.

Der besondere Vorteil der Erfindung und der erfindungsgemäße Gedanke liegt darin, daß die Detektion des Streulichtes über den gesamten Raumwinkel $4\pi$ eine entscheidende Verbesserung der Signal-Rausch-Verhältnisse der Empfangssignale liefert, wodurch der Einsatz billigster Sende- und Empfangselemente möglich wird und gleichzeitig auch noch Signale von kleinsten Streuteilchen empfangen werden können, was insbesondere beim herkömmlichen LDA-Verfahren größte Schwierigkeiten bereitet.

Die Erfindung soll im folgenden anhand von in den Zeichnungen dargestellten Ausführungsbeispielen näher erläutert werden. Es zeigen:

Figur 1: den schematischen Aufbau eines erfindungsgemäßen Laser-Doppler-Anemometers mit einer Laserdiode als Laserstrahlquelle und mit direkt auf einen geeigneten Photodetektor refokussierten Teilstrahlen;

Figur 2: eine zu Figur 1 analoge Anordnung eines Laser-Doppler-Anemometers mit Refokussierung jedes einzelnen Teilstrahles auf einen eigenen Photodetektor zur Verbesserung des Signal-Rausch-Verhältnisses (SNR);

Figur 3: eine zu Figur 1 analoge Anordnung eines Laser-Doppler-Anemometers mit Refokussierung der Teilstrahlen auf einen geeigneten Photodetektor mit zwei lichtempfindlichen Flächen zur zusätzlichen Erfassung der Richtungsinformation;

Figur 4: den schematischen Aufbau für die Anordnung einer Laserdiode außerhalb der optischen Achse zur Messung einer in der optischen Achse (Systemachse) liegenden Geschwindigkeitskomponente und direkte Refokussierung des Laserstrahls auf einen Photodetektor;

Figur 5: eine schematische Darstellung einer Anordnung zur Messung dreier orthogonaler Geschwindigkeitskomponenten analog zu Figur 1 und Figur 4 bei einer Wellenlänge;

Figur 6: eine zu Figur 2 analoge Anordnung eines Laser-Doppler-Anemometers mit Aufweitungsoptik zur Ge schwindigkeitsmessung über große Entfernungen;

Figur 7: eine zu Figur 1 analoge Anordnung eines Laser-Doppler-Anemometers zur Geschwindigkeitsmessung von durch Wandungen begrenzten strömenden Fluiden und Messung des Volumendurchflusses durch Messung der Geschwindigkeit an einem charakteristischen Punkt.

Figur 8: eine zu Figur 3 analoge Anordnung eines Laser-Doppler-Anemometers zur simultanen Messung von Geschwindigkeit und Richtung eines strömenden Fluids in zwei orthogonalen Komponenten mit einem geigneten 4-Quadranten-Photodetektor.

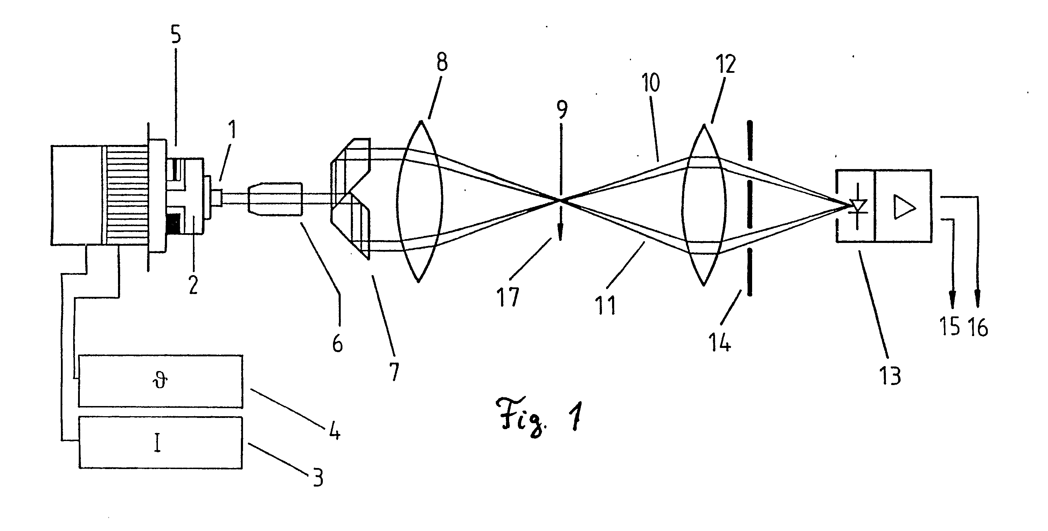

In der in Figur 1 gezeigten grundsätzlichen Anordnung ist eine Laserdiode 1 auf einen Montageblock 2 montiert und wird durch Stromversorgungseinheit 3 und Temperaturregelung 4 über ein Peltierelement 5 wellenlängenstabilisiert.

Das von Laserdiode 1 emittierte Licht wird mittels einer Fokussieroptik 6 über einen Strahlteiler 7 und eine Linse 8 auf einen fluiddurchströmten Meßort 9 fokussiert. Im Meßort 9 entsteht ein Streifensystem, wie es von einem Laser-Doppler-Anemometer, bekannt durch DE-OS-34 35 423, erzeugt wird.

Die Laserstrahlen 10 und 11 werden über eine Linse 12 auf einen Photodetektor 13 refokussiert.

Bewegen sich vom Fluid mitgeführte Partikel der Strömungsgeschwindigkeit 17 durch den Meßort 9, so wird das von diesen gestreute Licht durch eine Streulichtfalle (Blende) 14 abgeblockt.

Von einem Photodetektor 13 können dann eine AC-Signalkomponente 15 und eine DC-Signalkomponente 16 abgegriffen werden. Die DC-Signalkomponente 16 wird zur genauen Justierung des Photodektektors 13 verwendet. Ihr überlagert ist eine AC-Komponente 15, welche die Geschwindigkeitsinformation in Form einer Modulationsfrequenz (Dopplerfrequenz) als Differenzsignal zwischen der eingestrahlten Intensität $I_o$ und der am Meßort 9 in den gesamten Raumwinkel $4\pi$ gestreuten Streulichtintensität $I_{streu}$ enthält. Die vom Photodetektor 13 registrierte Intensität $I$ ist somit $I = I_o - I_{streu}$, wobei die Intensität $I$ mit der in der LDA-Technik wohlbekannten Dopplerfrequenz, welche die gesuchte Geschwindigkeitsinformation enthält, moduliert ist.

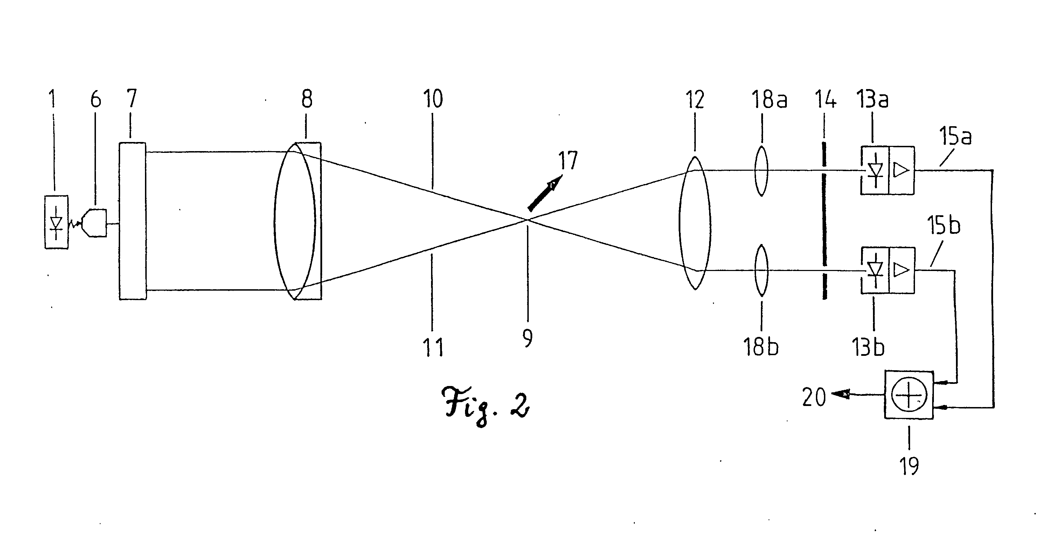

Figur 2 zeigt eine Erweiterung der in Figur 1 dargestellten Anordnung.

Die Erweiterung besteht darin, daß die beiden Laser-Teilstrahlen 10 und 11, die den Meßort 9 durchlaufen haben, mit Hilfe einer Optik 12 umgelenkt und mit je einer weiteren Optik 18a und 18b getrennt auf jeweils eine Halbleiter-Photodiode 13a und 13b fokussiert werden. Eine streulichtundurchlässige Blende 14 verhindert das Auftreffen von Streulicht auf die Detektoren 13a, 13b und läßt nur die Strahlen 10 und 11 passieren.

Jede Photodiode empfängt ein DC-Signal, das von der Intensität des auffallenden Teilstrahls bestimmt wird, und eine überlagerte AC-Komponente, die ihre Ursache in der Lichtstreuung in den Raumwinkel $4\pi$ der Partikel im Meßvolumen 9 hat und die die Geschwindigkeitsinformation enthält.

Jedes Detektorsignal der Photodioden 13a und 13b wird getrennt elektrisch verstärkt und anschließend mit der Addierstufe 19 zum Summensignal 20 addiert.

Der Vorteil des Einsatzes von zwei getrennten Detektoren liegt darin, daß die statistisch unabhängigen Signalanteile (Rauschen) sich in der Addierstufe teilweise auslöschen, die AC-Signalanteile sich aber durch phasenrichtige Addition verstärken.

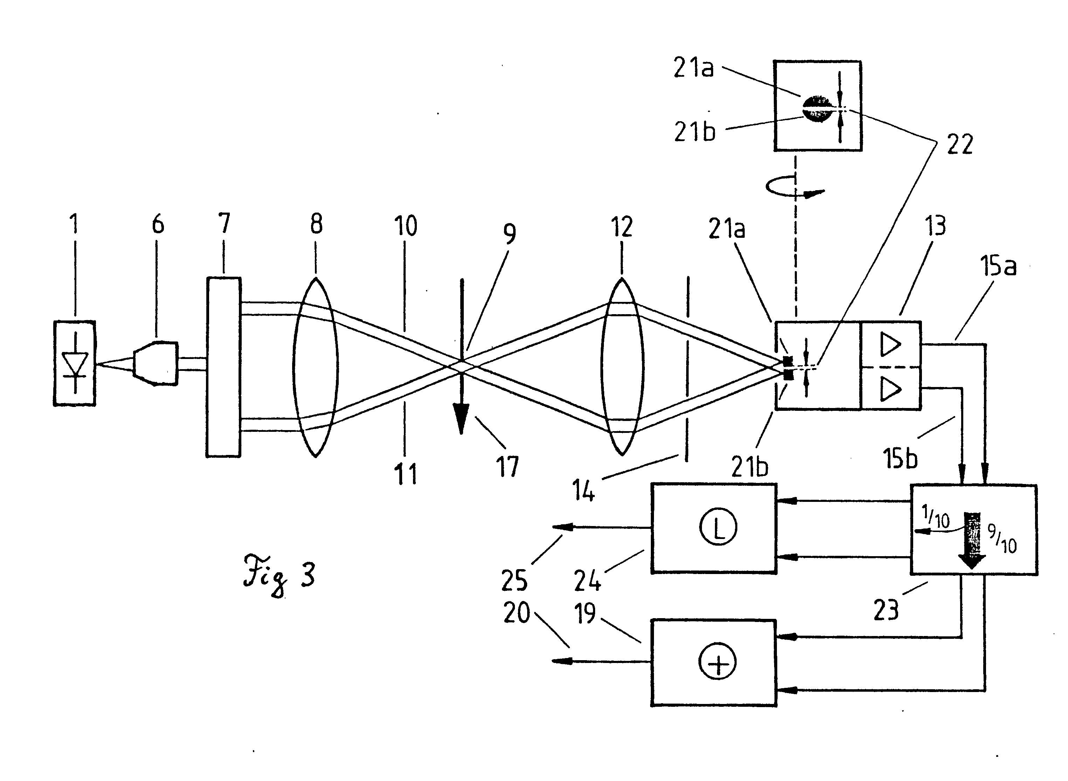

Figur 3 zeigt eine Variante der in Figur 1 dargestellten Anordnung.

Die vom Bereich 9 fortlaufenden Laserstrahlen 10 und 11 werden über eine Optik 12 auf ein Photodetektormodul 13, bestehend aus einer Photodiode mit zwei lichtempfindlichen Flächen 21a, 21b mit dem Separationsabstand 22 und integrierten Signalverstärkern für jede lichtempfindliche Fläche refokussiert.

Durchfliegt ein im strömenden Fluid 17 befindliches Partikel den Bereich 9, so streut es dort Licht in den gesamten Raumwinkel $4\pi$.

In dem dargestellten Ausführungsbeispiel wird dieses Streulicht in Bezug zu einem Photodetektor 13 durch eine Streulichtfalle 14 abgeblockt, so daß die gewünschte Geschwindigkeitsinformation über die Strömung 17 als eine einer DC-Komponente überlagerte AC-Komponente, welche das vorher beschriebene Differenzsignal $I$ zwischen eingestrahlter Intensität $I_o$ und Streulichtintensität $I_{streu}$ darstellt, nun in Form der Signale 15a, 15b der entsprechenden lichtempfindlichen Flächen 21a, 21b des Photodetektormoduls 13 zur Verfügung steht.

Die Signale 15a, 15b erscheinen nun je nach Flugrichtung eines Partikels durch den Bereich 9 zeitlich in veränderter Reihenfolge, d.h. in zeitlich versetztem Abstand, so daß eine Richtungserkennung der Strömung 17 möglich ist.

In dem dargestellten Ausführungsbeispiel werden die Signale 15a, 15b über einen Richtkoppler 23 einer Logik 24, welche die erwähnte zeitliche Reihenfolge der Signale 15a und 15b detektiert und als Richtungssignal 25 ausgibt, und einem Addierer 19, welcher die Signale 15a und 15b, die den Richtkoppler 23 passiert haben zum Geschwindigkeitssignal 20 addiert, zugeführt.

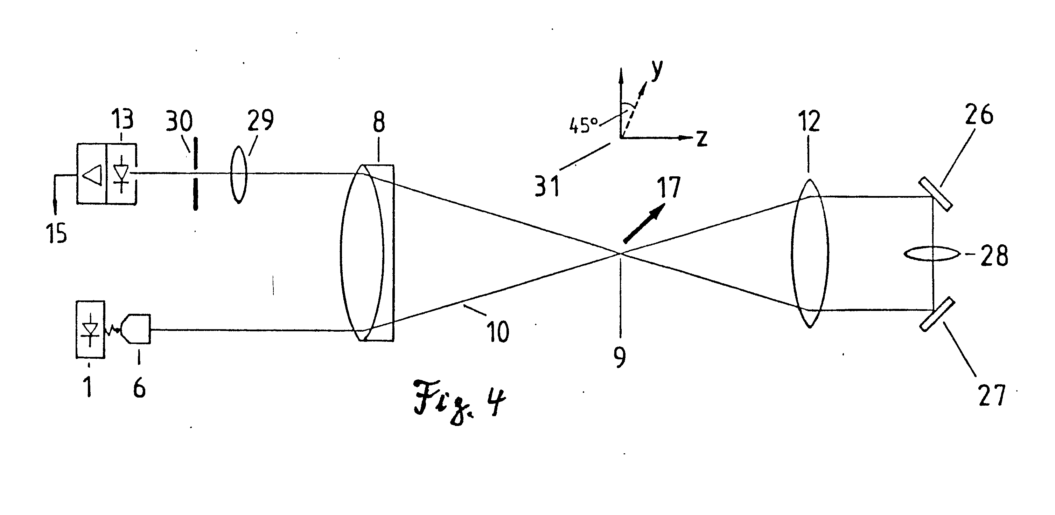

Figur 4 zeigt den Aufbau zur Messung einer in der optischen Achse liegenden Geschwindigkeitskomponente.

Das von einer Laserdiode 1 emittierte Licht wird mit einer Fokussieroptik 6 über eine Linse 8 in den Meßort 9 fokussiert. Nach Durchlaufen des Meßortes 9 wird mit einer Linse 12 und zwei Umlenkspiegeln 26,27 der Strahl 10 der Laserdiode 1 auf den Meßort 9 zurückgeworfen und im Meßort 9 mit Hilfe einer Linse 28 fokussiert. Es bildet sich dann im Meßort 9 ein Streifensystem senkrecht zur Achse z eines Koordinatensystems 31 aus. Die Richtung der z-Achse ist die optische Achse (Systemachse).

Der Laserstrahl 10 wird nach Rücklauf durch den Meßort 9 über eine Linse 8 parallel zur z-Achse des Koordinatensystems 31 geführt und mit einer Linse 29 auf einen Photodetektor 13 fokussiert. Die Streulichtfalle 30 dient der Eliminierung von Streulicht.

Bewegen sich vom Fluid mitgeführte Partikel mit der Strömungsgeschwindigkeit v (17) durch den Meßort 9, so kann in Relation zum Koordinatensystem 31 die Geschwindigkeitskomponente $V_z$ in z-Richtung des Geschwindigkeitsvektors v, (17) eines Partikels genau dann gemessen werden, wenn das Licht der Laserdiode 1 eine Kohärenzlänge $l_c$ aufweist, die größer ist als der vom Laserstrahl 10 zurückgelegte Weg $\Delta l$ ausgehend vom Meßort 9 über Linse 12 und Umlenkspiegel 26,27 zurück zu Meßort 9.

Der Photodetektor 13 generiert dann Signale 15, welche die Geschwindigkeitsinformation als Differenzsignal $I$ zwischen eingestrahlter Intensität $I_o$ und Streulichtintensität $I_{streu}$ in den gesamten

Raumwinkel $4\pi$ enthalten, wobei gilt $I = I_o - I_{streu}$. Da das Interferenzstreifensystem in diesem Fall senkrecht zur z-Richtung verläuft, ist das Streulicht I, welches der Detektor 13 empfängt, mit der Dopplerfrequenz moduliert, die der Geschwindigkeitskomponente $V_z$ in Z-Richtung, also in Richtung der optischen Achse, entspricht. Eine DC-Komponente kann zur genauen Positionierung eines Photodetektors 13 dem Signal 15 entnommen werden.

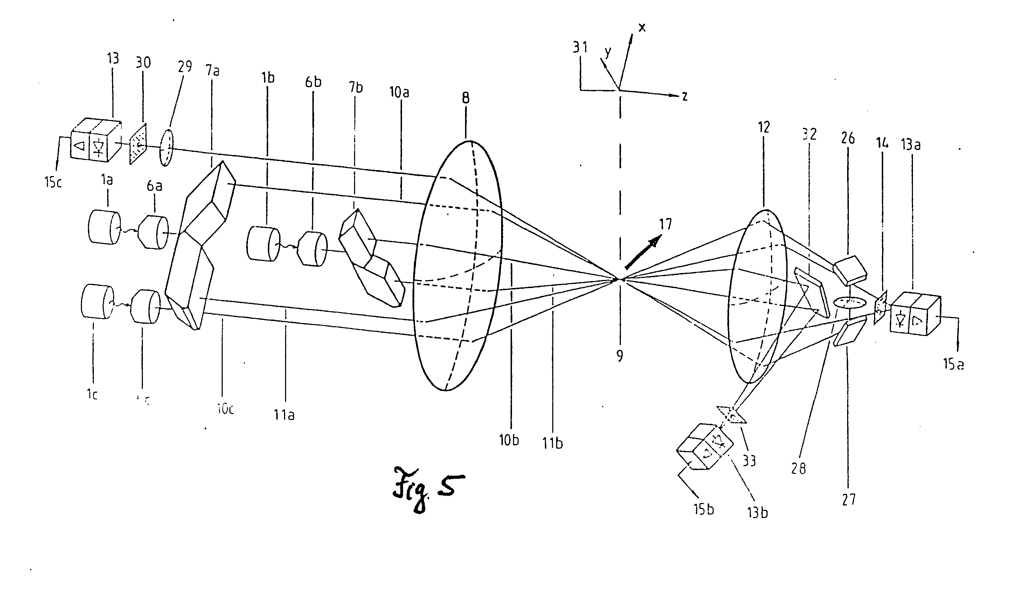

Figur 5 zeigt eine geeignete Kombination der Anordnungen gemäß Figur 1 und Figur 4 zur Messung von 3 orthogonalen Geschwindigkeitskomponenten.

Das von Laserdioden 1a, 1b emittierte Licht wird von Fokussieroptiken 6a, 6b über orthogonal zueinander angeordnete Strahlteiler 7a, 7b und eine Sendelinse 8 auf einen fluiddurchströmten Meßort 9 fokussiert. Im Meßort 9 entstehen zwei orthogonale Interferenzstreifensysteme, wie von einem durch die DE-OS-34 35 423 bekannten Laser-Doppler-Anemometer erzeugt.

Die Laserstrahlen 10a, 11a der Laserdiode 1a werden nach Durchlaufen des Meßortes 9 über eine Linse 12 auf einen Photodetektor 13a und die von einer Laserdiode 1b erzeugten Strahlen 10b, 11b nach Durchlaufen des Meßortes 9 und nach Umlenkung mit einem Spiegel 32 auf einen Photodetektor 13b über eine Blende 33, die nur die Strahlen 10b und 11b passieren läßt, refokussiert. Bewegen sich vom Fluid mitgeführte Partikel der Strömungsgeschwindigkeit v (17), durch den Meßort 9, so wird das von diesen gestreute Licht durch Streulichtfallen 14,33 abgeblockt und nur die Strahlen 10b, 11b bzw. 10a, 11a fallen direkt auf die Detektoren 13b bzw. 13 a.
Von den Photodetektoren 13a, 13b werden entsprechende Signale 15a, 15b generiert, welche die Geschwindigkeitsinformationen als Differenzsignale $I^i$ zwischen eingestrahlter Intensität $I^i_o$ und der Streulichtintensität $I^i_{streu}$ in den gesamten Raumwinkel $4\pi$ enthalten, wobei gilt

$$I^i = I^i_o - I^i_{streu}; \quad i = 1,2.$$

In Bezug auf ein Koordinatensystem 31 detektiert ein Photodetektor 13a die X-Komponente des Geschwindigkeitsvektors v (17), ein Photodetektor 13b die dazu orthogonale y-Komponente des Geschwindigkeitsvektors v (17).

Eine DC-Komponente kann zur geanuen Positionierung eines entsprechenden Photodetektors 13a, 13b aus einem jeweiligen Signal 15a, 15b gewonnen werden.
Entsprechend der Anordnung gemäß Figur 4 wird das von einer Laserdiode 1c emittierte Licht mit einer Fokussieroptik 6c über eine Linse 8 in den Meßort 9 fokussiert und nach dessen Durchlaufen mit einer Linse 12 und zwei Umlenkspiegeln 16,27 auf den Meßort 9 zurückgeworfen und in den Meßort 9 mit Hilfe einer Linse 28 refokussiert. Es bildet sich dann im Meßort 9 ein Streifensystem senkrecht zur Achse z des Koordinatensystems 31 aus.
Der Laserstrahl 10c wird nun nach Durchlaufen des Meßortes 9 mittels einer Linse 8 parallel zur z-Achse des Koordinatensystems 31 geführt und mit einer Linse 29 auf einen Photodetektor 13c fokussiert. Die Steulichtfalle 30 dient der Eliminierung von Streulicht.
Der Photodetektor 13c generiert dann Signale 15c welche die Geschwindigkeitsinformation für die z-Komponente des Geschwindigkeitsvektors 17 als Differenzsignal I zwischen eingestrahlter Intensität $I_o$ und Streulichtintensität $I_{streu}$ in den gesamten Raumwinkel $4\pi$ als AC-Komponente enthalten.
Eine DC-Komponente kann zur genauen Positionierung eines Photodetektors 13c dem Signal 15c entnommen werden.

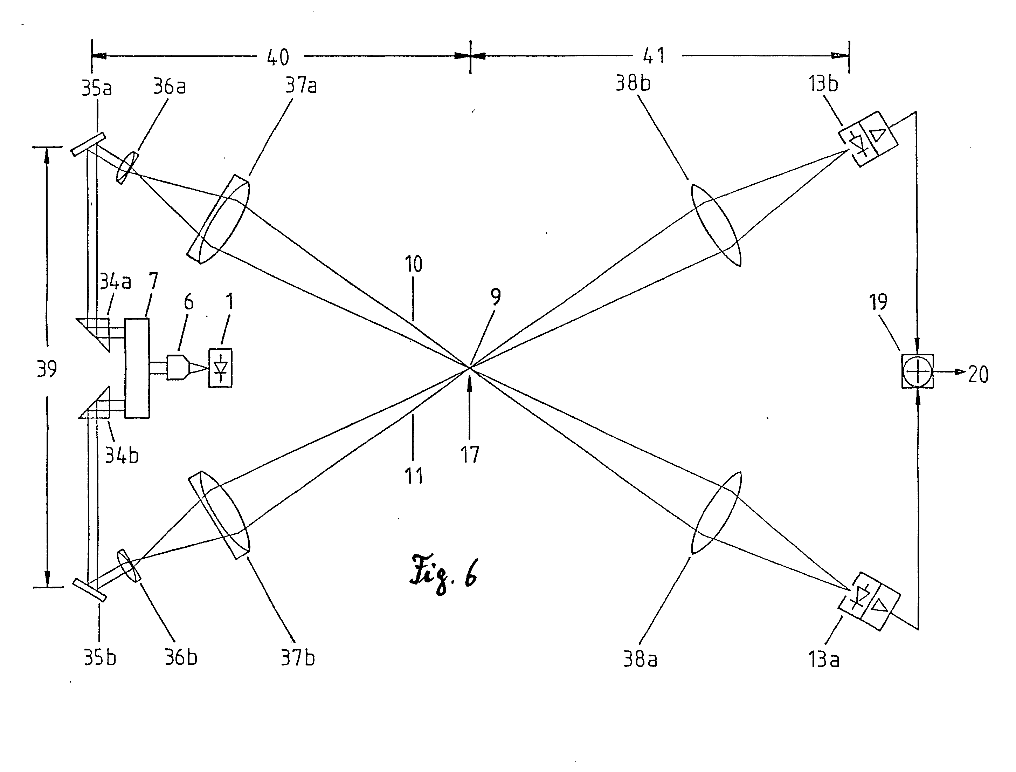

Figur 6 zeigt eine Erweiterung der in Figur 2 dargestellten Anordnung.

Die Erweiterung besteht darin, daß die Laserstrahlen 10,11 nach Teilung durch je ein Prisma 34a und 34b umgelenkt werden und im Abstand 39 dann durch je einen Umlenkspiegel 35a und 35b abermals umgelenkt und anschließend mit Hilfe von je einem Aufweitungssystem 36a und 37a bzw. 36b und 37b aufgeweitet werden.
Die Teilstrahlen 10 und 11 werden mit Hilfe dieser Aufweitungssysteme im Meßort 9 fokussiert.

Der Meßort 9 (Schnittpunkt) befindet sich in einer Entfernung 40 von der Basis des Strahlenganges, die i.a. groß gegenüber dem Strahlabstand 39 gewählt wird.
Im Schnittpunkt 9 entsteht ein Interferenzstreifensystem. Partikel, die mit der Fluidströmung 17 den Meßort 9 durchqueren, streuen Licht aus den beiden Teilstrahlen 10 und 11 in den genannten Raumwinkel $4\pi$.
Die beiden divergenten Teilstrahlen werden hinter dem Schnittpunkt durch je eine Linse 38a bzw. 38b auf je eine Halbleiter-Photodiode 13a bzw. 13b fokussiert.
Die Detektoren befinden sich in einer frei wählbaren Entfernung 41 hinter dem Meßort 9 (Schnittpunkt), die nur durch die Größe der verfügbaren Sammeloptik 38a bzw. 38b begrenzt wird.

Entsprechend wie in der Figur 2 werden die Signale der Photodetektoren 13a bzw. 13b elektrisch verstärkt und anschließend in einer Addierstufe 19 zum Signal 20 addiert.

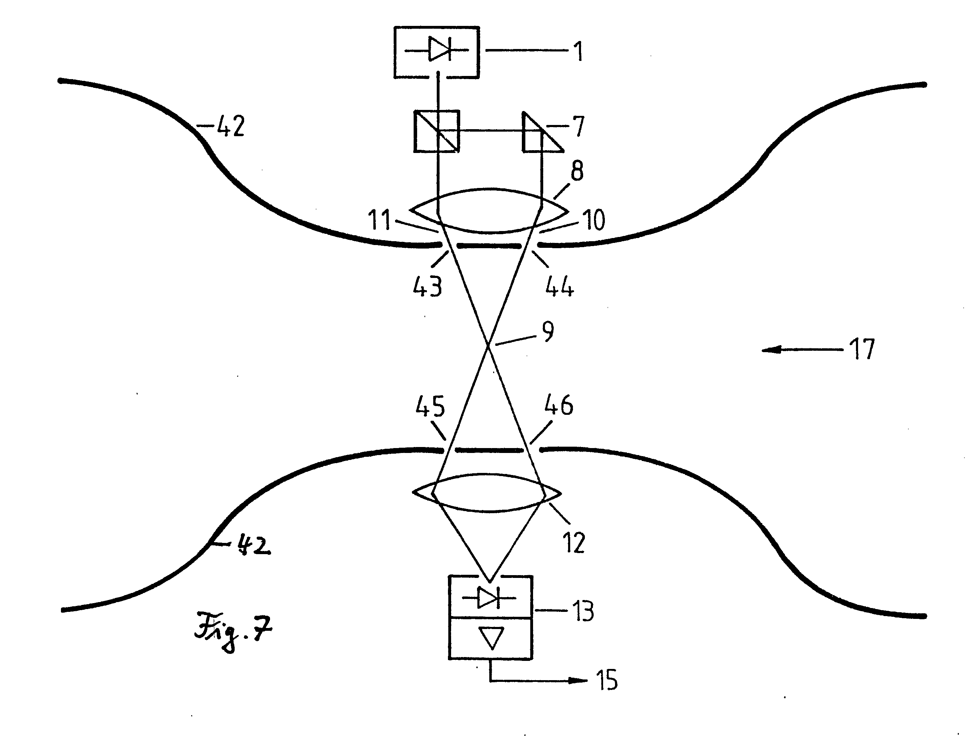

Figur 7 zeigt eine spezielle Anwendung der Anordnung gemäß Figur 1.
Die Laserstrahlen 10,11 werden hier durch Bohrungen 43,44 einer Wandung 42 im Bereich 9 fokussiert.

Die Strahlen 10,11 werden weiter durch Bohrungen 45, 46 einer Wandung 42 geführt und über eine Linse 12 auf einen Photodetektor 13 refokussiert.

Die benötigten Bohrungen können klein gehalten werden und darüberhinaus mit optisch brechenden Medien als Ersatz für die Linsen 8 bzw. 12 gefüllt werden. Der optische Zugang zum Meßort 9 kann somit von seinen räumlichen Abmessungen her sehr klein gehalten werden.

Bei geeigneter Ausführung der Kontur der Wandung 42 bildet sich ein Strömungsprofil des Fluids 17 in der Weise aus, daß durch Messung der repräsentativen Geschwindigkeit 17 am Meßort 9 der Volumendurchfluß durch den Bereich erhalten wird, welcher durch die Wandung 42 begrenzt ist. Die Wandung 42 kann dabei als einfacher Kanal, als Düse oder auch z.B. als Blende oder Verengung gestaltet sein.

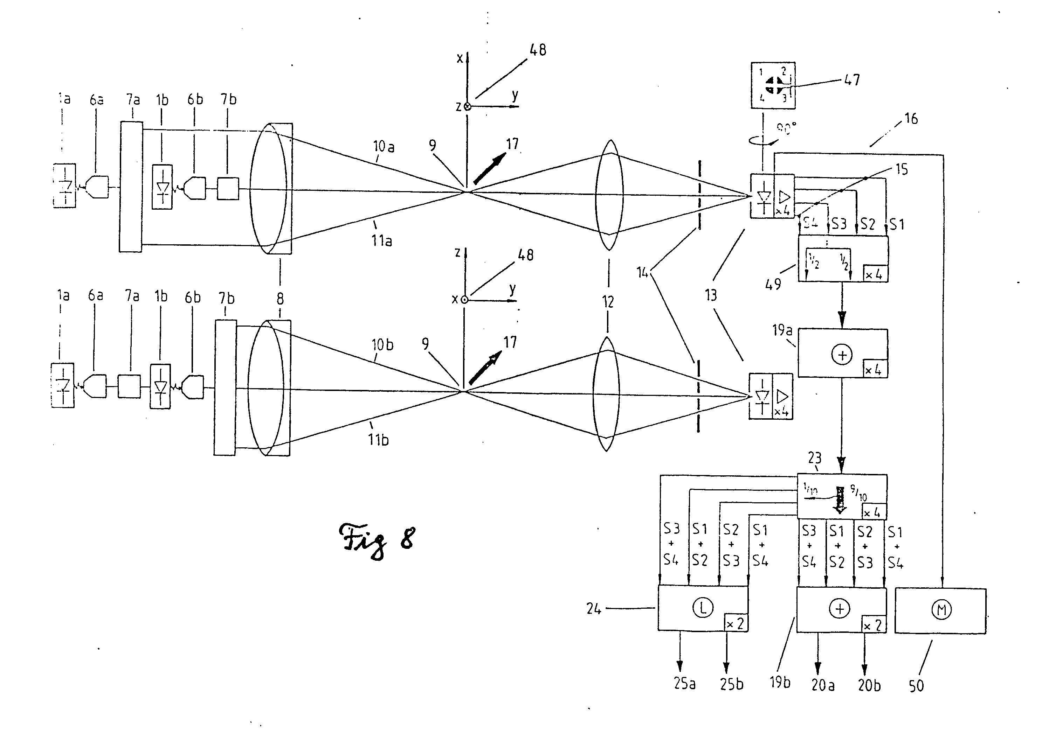

Figur 8 zeigt eine Erweiterung der in Fugur 3 dargestellen Anordnung.

Von Laserdioden 1a, 1b emittiertes Licht wird über Fokussieroptiken 6a, 6b und orthogonal zueinander angeordneten Strahlteilern 7a, 7b und eine Optik 8 in einen bestimmten Bereich 9 einer Strömung 17 eines Partikel enthaltenden Fluids derart konzentriert, daß sich zwei zueinander orthogonale Interferenzstreifensysteme orthogonal zu den Achsen X und Z eines Koordinatensystems 48 ausbilden.

Die von einem Bereich 9 weiterlaufenden Laserstrahlen 10a, 11a einer Laserdiode 1a und die Strahlen 10b, 11b einer Laserdiode 1b werden über eine Optik 12 auf ein 4-Quadranten-Photodetektormodul 13 derart refokussiert, daß jeweils eine Hälfte der o.g. Interferenzstreifensysteme für die x-Richtung eines Koordinatensystems 48 auf die Quadrantenkombinationen (1 + 2) und (3 + 4) und für die z-Richtung auf die Quadrantenkombinationen (1 + 4) und (2 + 3) nach der Anordnung 47 abgebildet wird.

Durchfliegt ein im strömenden Fluid 17 befindliches Partikel einen bestimmten Bereich 9, wird von diesem Licht in den gesamten Raumwinkel $4\pi$ gestreut. Dieses Streulicht wird durch eine Streulichtfalle 14 in Bezug zu einem 4-Quadranten-Photodetektormodul 13 abgeblockt. Die gewünschte Information über die Geschwindigkeitskomponenten einer Strömung 17 in z- und x-Richtung eines Koordinatensystems 48 enthalten dann die Signale 15 (Si, i = 1,...,4) eines 4-Quadranten-Photodetektormoduls 13 jeweils als einer DC-Komponente überlagerte AC-Komponente, welche das Differenzsignal $I^i$ zwischen eingestrahler Intensität $I^i_o$ und Streulichtintensität $I^i_{streu}$ des jeweils i-ten Quadranten nach Anordnung 47 darstellt.

In Anlehnung an Figur 3 werden die entsprechenden Kombinationen der Signale 15 ($S_i; i = 1,...,4$) mittels eines 4-fach-Leistungsteilers 49 und eines 4-fach-Addierers 19a hinsichtlich der oben erwähnten Quadrantenkombinationen (1 + 2) als Signal (S1 + S2) und (3 + 4) als Signal (S3 + S4) für die X-Richtung, (1 + 4) als Signal (S1 + SS4) und (2 + 3) als Signal (S2 + S3) für die z-Richtung des Geschwindigkeitsvektors einer Strömung 17 erzeugt.

In Bezug zu Figur 3 werden die strömungsrelevanten Parameter "Richtung " und "Geschwindigkeit" einer Strömung 17 mittels eines 4-fach-Richtkopplers 23 über eine Signalverarbeitung mit einer 2-fach-Logik 24 und einem 2-fach-Addierer 19b sowohl für die X-Richtung eines Koordinatensystems 48 als Signale 25a und 20a, als auch für die z-Richtung in Form der als Signale 25b und 20b generiert.

Eine DC-Komponente 16 wird zur Steuerung der optimierten Justage eines 4-Quadranten-Photodetektormoduls 13 über eine geregelte Motorverschiebung 50 verwendet.

## Ansprüche

1. Laser-Doppler-Anemometer zur Messung von Geschwindigkeiten bewegter Meßobjekte (9, 17) mit einer Laserstrahlquelle (1), einer Umlenkoptik (7) für wenigstens zwei Teilstrahlen (10, 11), einer Sammeloptik (8) zur Fokussierung wenigstens einer der beiden Teilstrahlen (10, 11) auf das Meßobjekt (9, 17) und mit wenigstens einem Photodelektor (13) zur Detektion der vom Mebört (9) fortlaufenden Laserstrahlen (10, 11), dadurch gekennzeichnet, daß die durch bewegte Meßobjekte intensitätsmodulierten Laserstrahlen (10, 11, 10 a, 10 b, 10 c, 11 a, 11 b, 11 c), die vom Meßort (9) fortlaufen, direkt auf eine Halbleiter-Photodiode (13) refokussiert werden bei gleichzeitiger Eliminierung von Streulichtanteilen.

2. Laser-Doppler-Anemometer nach Anspruch 1, dadurch gekennzeichnet, daß die vom Meßort (9) fortlaufenden Laserstrahlen (10,11) auf wenigstens zwei Photodioden (13a, 13b) refokussiert werden und ein Signal (20) über eine Vorrichtung (19) regeneriert wird.

3. Laser-Doppler-Anemometer nach Anspruch 1, dadurch gekennzeichnet, daß die vom Meßort (9) fortlaufenden Strahlen (10, 11) oder Teile des vom bewegten Meßobjekt (9, 17) ausgesandten Streulichtes zur Detektion der Geschwindigkeits- und der Richtungsinformation auf einen geeigneten Doppel-Photodiode (13, 21a, 21b) refokussiert werden.

4. Laser-Doppler-Anemometer nach Anspruch 1, dadurch gekennzeichnet, daß eine Laserstrahlquelle (1) hinreichende Kohärenzlänge aufweist und ein Laserstrahl (10) nach Durchlaufen des Meßortes (9) und danach nach geeigneter Umlenkung (26, 27) auf den Meßort (9) fokussiert und anschließend auf eine Photodiode (13) refokussiert wird.

5. Laser-Doppler-Anemometer nach Anspruch 1, 3 und 4, dadurch gekennzeichnet , daß zwei Laser-Doppler-Anemometer nach Anspruch 1 orthogonal zueinander angeordnet werden und ein Laser-Doppler-Anemometer nach Anspruch 4 zugefügt wird zur simultanen Messung dreier orthogonaler Geschwindigkeitskomponenten bewegter Meßobjekte (9,17) auch bei einer Wellenlänge und daß für die zwei Komponenten anch Anspruch 1 Photodioden gemäß Anspruch 3 zur Richtungserkennung eingesetzt werden können.

6. Laser-Doppler-Anemometer nach Anspruch 1 und 2, dadurch gekennzeichnet, daß unter Verwendung zusätzlicher Optik (34 a, 34 b, 35 a, 35 b, 36 a, 36 b, 37 a, 37 b) über sehr große Entfernung (40) Geschwindigkeiten bewegter Meßobjekte (9, 17) gemessen werden.

7. Laser-Doppler-Anemometer nach Anspruch 1, dadurch gekennzeichnet, daß mit Hilfe der Laserstrahlen (10, 11) durch kleine Öffnungen (43, 44, 45, 46) einer Wandung (42) die Geschwindigkeit bewegter Objekte gemessen wird.

8. Laser-Doppler-Anemometer nach Anspruch 1 und 3, dadurch gekennzeichnet, daß zwei Laser-Doppler-Anemometer nach Anspruch 1 orthogonal zueinander angeordnet werden und zwei orthogonale Geschwindigkeitskomponenten mit Richtungsinformation bewegter Meßobjekte (9, 17) simultan mit einem geeigneten 4-Quadranten-Photodetektor (13, 47) in der Art und Weise von Anspruch 3 gemessen werden.

9. Laser-Doppler-Anemometer nach Anspruch 1 und 7 dadurch gekennzeichnet, daß eine gekrümmte Wandberandung (42) mit entsprechenden kleinen Öffnungen (43, 44, 45, 46) gewählt wird, die in der Weise ausgebildet ist, daß durch das Kontraktionsverhältnis eine homogene Geschwindigkeitsverteilung der sich bewegenden Meßobjekte (17) entsteht, so daß durch Messung der repräsentativen Geschwindigkeit am Orte (9) der Durchfluß erhalten wird.

Fig. 1

Fig. 2

Fig. 3

Fig. 4

EP 0 333 905 A1

Fig. 5

EP 0 333 905 A1

Fig. 6

Fig. 7

EP 0 333 905 A1

Fig 8

**Europäisches Patentamt**

# EUROPÄISCHER RECHERCHENBERICHT

Nummer der Anmeldung

EP 88 10 4807

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | DE-A-1 800 860 (BRITISH AIRCRAFT) <br> * Figur 1; Ansprüche 1-3 * <br> --- | 1,4 | G 01 P 5/00 |
| A | JOURNAL OF PHYSICS E. SCIENTIFIC-INSTRUMENTS, Band 5, Nr. 9, September 1972, Seiten 893-896; H.H. BOSSEL et al.: "Noise-cancelling signal difference method for optical velocity measurements" <br> * Abschnitte 3.2,3.3;. Figuren 3,6 * <br> --- | 1,2 | |
| A | GB-A-1 330 163 (WATRASIEWICZ) <br> * Figuren 1-3; Anspruch 1 * <br> --- | 1,4 | |
| A | JOURNAL OF PHYSICS E. SCIENTIFIC-INSTRUMENTS, Band 10, Nr. 8, August 1977, Seiten 811-813; I. TAI et al.: "Digital frequency meter for burst-like laser doppler signals" <br> * Figur 4; Seite 813, Abschnitt 4 * <br> --- | 1,4 | |
| D,A | DE-A-3 435 423 (BUNDESREPUBLIK DEUTSCHLAND) <br> * Insgesamt * <br> ----- | 1 | **RECHERCHIERTE SACHGEBIETE (Int. Cl.4)** <br><br> G 01 P <br> G 01 F |

Der vorliegende Recherchenbericht wurde für alle Patentansprüche erstellt

| Recherchenort | Abschlußdatum der Recherche | Prüfer |
|---|---|---|
| DEN HAAG | 21-12-1988 | KOLBE W.H. |